# FASCICULE DE BREVET EUROPEEN

(11) **EP 3 976 944 B1**
(45) Date de publication et mention de la délivrance du brevet: **02.08.2023**
(21) Numéro de dépôt: 20737523.9
(22) Date de dépôt: 28.05.2020
(51) Int. Cl.: F01M 13/04, B01D 46/10, B01D 46/00, F01M 13/00

(54) **SYSTÈME DE DÉCANTATION D'HUILE POUR UN MOTEUR À COMBUSTION INTERNE**
ÖLDEKANTIERUNGSSYSTEM FÜR EINE BRENNKRAFTMASCHINE
OIL DECANTATION SYSTEM FOR AN INTERNAL COMBUSTION ENGINE

(30) Priorité: 29.05.2019 FR 1905794
(43) Date de publication de la demande: 06.04.2022
(73) Titulaire: NOVARES France, 92140 Clamart (FR)
(72) Inventeur: DEMANGEOT, Jérôme, 62350 Calonne Sur La Lys (FR); POCQUET, Romain, 62124 Bertincourt (FR); WAYMEL, Gilles, 62410 Hulluch (FR)
(74) Mandataire: Germain Maureau
(86) Numéro de dépôt international: PCT/FR2020/050905
(87) Numéro de publication internationale: WO 2020/240141

(56) Documents cités:
- DE-A1-102010 029 322
- FR-A1- 2 881 468
- US-A1- 2002 100 465
- US-A1- 2016 115 911
- US-A1- 2017 204 755
- US-A1- 2019 120 098

## Description

La présente invention concerne un système de décantation d'huile pour un moteur à combustion interne.

Au cours de son fonctionnement, un moteur à combustion interne produit des gaz de fuite dits gaz « blow-by » ou gaz de carter, c'est-à-dire des gaz qui sont enfermés dans le carter moteur. Ces gaz sont produits lors du fonctionnement normal du moteur. Le phénomène de «blow-by » ou de fuite apparait lorsque des gaz mis sous pression lors de la phase de compression s'échappent par les passages formés entre les segments et les chemises, les guides de soupapes, les palier pour se retrouver dans le carter moteur où ils se mélangent avec les vapeurs d'huile. Ce phénomène s'accentue avec l'usure des segments et des chemises.

Les gaz de fuite doivent être évacués du carter moteur pour ne pas mettre ce dernier en surpression et pour ne pas remonter dans les chambres de combustion où leur combustion s'avère tout à fait délétère en terme d'émission de particules toxiques

Les gaz de fuite étant chargés de gouttelettes d'huile, ils ne peuvent pas être rejetés dans l'atmosphère ; cela est interdit par les normes anti-pollution en vigueur. Les gaz de fuite sont donc réintroduits à l'admission d'air après avoir été débarrassés des gouttelettes d'huile dont ils sont chargés.

Il est important que l'opération de nettoyage des gaz de fuite soit la plus efficace possible pour au moins trois raisons.

L'introduction de gaz de fuite chargés d'huile pour les faire brûler dans les cylindres augmente l'émission de particules toxiques. Cela détériore le rendement du moteur et, enfin, cela augmente la consommation d'huile du moteur.

Pour cela, il existe des dispositifs de séparation qui nettoient les gaz de fuite en capturant les gouttelettes d'huile ; ces dispositifs de séparation peuvent agir par décantation.

On connaît, par exemple, par le document FR-A-2984175, un dispositif de séparation d'huile fonctionnant par décantation. Dans cet art antérieur, il est notamment proposé une solution au problème des pertes de charge lorsque le régime moteur augmente. A cette fin, il a été envisagé d'équiper le dispositif de séparation d'huile d'un organe d'obstruction mobile sous l'effet de la pression exercée par le flux gazeux en amont, l'organe d'obstruction revenant à sa position de repos sous l'action de moyens de rappel du type ressort.

La solution décrite dans cet art antérieur présente toutefois l'inconvénient de nécessiter un ressort de manière à ramener l'organe d'obstruction dans sa position de repos. Cette solution est donc relativement complexe à mettre en oeuvre et, de surcroît, entraîne une augmentation non négligeable du coût de fabrication. US2017/204755 A1 décrit un autre exemple de dispositif de séparation.

Dans ce contexte technique, un but de l'invention est de proposer un système de décantation d'huile ne présentant pas les inconvénients de l'art antérieur susmentionné.

L'invention concerne un système de décantation d'huile pour un moteur à combustion interne comprenant au moins une paroi principale munie d'une ouverture de passage pour un flux de gaz de fuite et un dispositif de séparation disposé en aval de ladite ouverture de passage dans le sens de circulation dudit flux de gaz de fuite, le dispositif de séparation comprenant un clapet doté de moyens de décantation aptes à retenir l'huile contenue dans le gaz de fuite et à laisser passer un flux de gaz de fuite épuré, caractérisé en ce que le clapet est monté de manière pivotante sur la paroi principale de telle sorte que son inclinaison par rapport à ladite paroi principale varie en fonction du flux de gaz de fuite.

Ainsi, l'invention propose un dispositif de décantation d'huile qui permet d'adapter l'inclinaison du clapet au flux de gaz de fuite. De ce fait, lorsque le débit du flux de gaz de fuite augmente en amont, il engendre une inclinaison plus importante du clapet par rapport à la paroi principale, ce qui permet d'évacuer un débit de gaz plus important en aval. La solution de l'invention offre donc les mêmes avantages que la solution décrite précédemment tout en évitant l'utilisation d'un ressort pour ramener le clapet dans sa position de repos.

Selon plusieurs caractéristiques de l'invention prises isolément ou de manière combinée :
- le clapet est mobile entre une position de fermeture dans laquelle son angle d'inclinaison par rapport à la paroi principale est nul, le flux de gaz de fuite circulant uniquement au travers des moyens de décantation du clapet, et une position d'ouverture dans laquelle son angle d'inclinaison par rapport à la paroi principale n'est pas nul, le flux de gaz de fuite circulant en partie au travers des moyens de décantation du clapet et en partie au travers d'une section de passage formée entre la paroi principale et le clapet.
- le clapet est maintenu en position de fermeture par gravité.
- le clapet comprend une première extrémité reliée de manière pivotante sur la paroi principale et une deuxième extrémité sensiblement parallèle à ladite première extrémité.
- le clapet comprend un élément destiné à faire contrepoids, ledit élément étant disposé au niveau de la deuxième extrémité.
- le système comprend une structure de tamis flexible s'étendant depuis la deuxième extrémité du clapet et disposée de telle sorte que, dans la position d'ouverture du clapet, le flux de gaz de fuite circulant à travers la section de passage formée entre la paroi principale et le clapet traverse au moins partiellement ladite structure de tamis, ladite structure de tamis étant ainsi apte à retenir l'huile contenue dans ledit flux gaz de fuite et à laisser passer un flux de gaz de fuite épuré.
- le système comprend des moyens de butée aptes à limiter l'angle d'inclinaison du clapet par rapport à la paroi principale.
- les moyens de butée sont configurés pour amortir élastiquement les chocs.
- le clapet est configuré pour avoir un angle d'inclinaison non nul avec la paroi principale lorsque le débit du flux de gaz de fuite au niveau de l'ouverture est suffisamment important pour ouvrir ledit clapet et est, par exemple, supérieur à 20 L/min.

Selon un autre aspect, l'invention concerne un moteur à combustion interne comprenant un système de décantation tel que décrit précédemment.

L'invention sera davantage comprise à la lecture de la description non limitative qui va suivre, faite en référence aux figures ci-annexées.
- La figure 1 représente de manière schématique un moteur équipé d'un système de décantation selon l'invention.
- la figure 2 est une vue en perspective, de dessus d'un couvre-culasse intégrant un système de décantation selon l'invention.
- La figure 3 est une vue similaire à la figure 2, une paroi externe du couvre-culasse ayant été retirée de manière à voir l'intérieur du système de décantation ;
- la figure 4 est une vue en perspective du clapet équipant le système de décantation représenté sur la figure 3 ;
- la figure 5 est une vue de face du clapet représenté sur la figure 4 ;
- la figure 6 est une vue en perspective de la paroi principale du système de décantation sur laquelle s'articule le clapet représenté sur la figure 4 ;
- La figure 7 est une vue de côté et en coupe transversale du détail A de la figure 3, le clapet étant dans sa position de fermeture ;
- La figure 8 est une vue similaire à la figure 7, le clapet étant dans une position d'ouverture ;
- La figure 9 est une vue similaire à la figure 8, le clapet étant muni d'un contrepoids;
- la figure 10 est une vue similaire à la figure 8, une paroi interne du couvre-culasse étant munie d'un élément de butée ;
- la figure 11 est une vue similaire à la figure 8, le clapet étant muni à son extrémité libre d'une structure en tamis ;
- la figure 12 est une vue en coupe transversale selon le plan de coupe P1 représenté sur la figure 3 ;
- La figure 13 est un graphe montrant l'évolution du différentiel de pression entre l'extérieur et l'intérieur du boîtier de décantation en fonction du débit de flux gazeux pour plusieurs modes de réalisation du système de décantation.

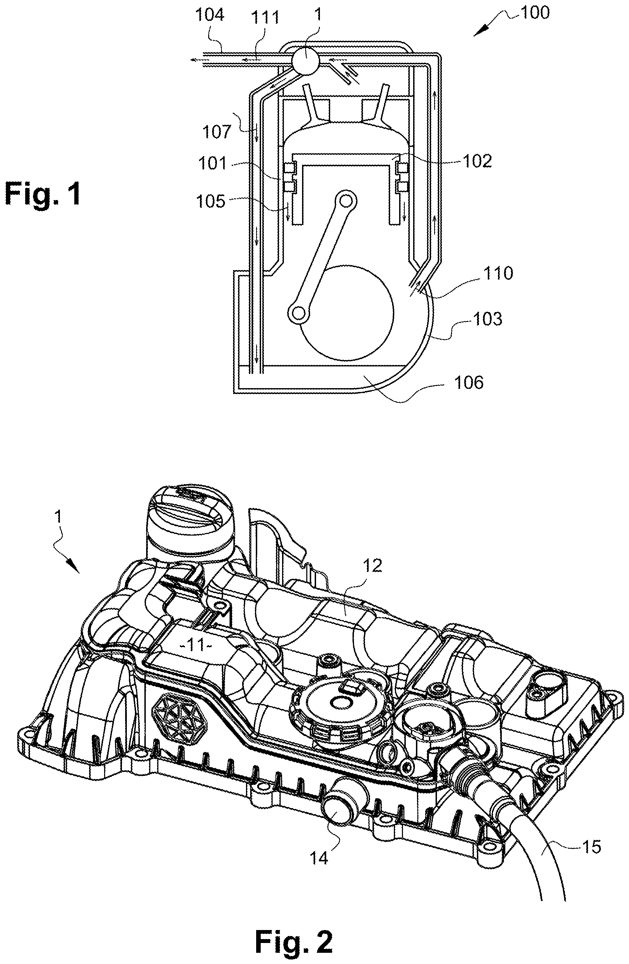

De façon schématique, un moteur 100 à combustion interne comme représenté sur la figure 1 comprend notamment un cylindre 101 dans lequel se déplace un piston 102, un carter 103 dans lequel barbotte de l'huile 106, et une conduite 104 d'aspiration. Au cours du fonctionnement du moteur, des gaz brûlés 105 s'infiltrent dans le carter 103 d'huile en passant entre le cylindre 101 et le piston 102 au travers de la segmentation. Leur évacuation provoque un flux gazeux dit de fuite 110 chargé de gouttelettes d'huile collectées au cours du barbotage dans l'huile 106.

Le moteur 100 est équipé d'un système de décantation 1 d'huile selon l'invention.

Les gaz de fuite 110 sont acheminés en entrée du système de décantation 1 d'huile selon l'invention, ce dernier permettant de débarrasser le flux de gaz de fuite 110 des gouttelettes d'huile qu'il contient. Les gouttelettes d'huile 107 capturées sont collectées et acheminées vers le carter 103 d'huile pour y être recyclées. Le flux gazeux 111 débarrassé des gouttelettes d'huile, dénommé par la suite flux de gaz de fuite épuré, est évacué dans la conduite 104 d'aspiration d'air du moteur. Ce flux gazeux 111 possède en général une quantité d'huile restante très faible, voire nulle.

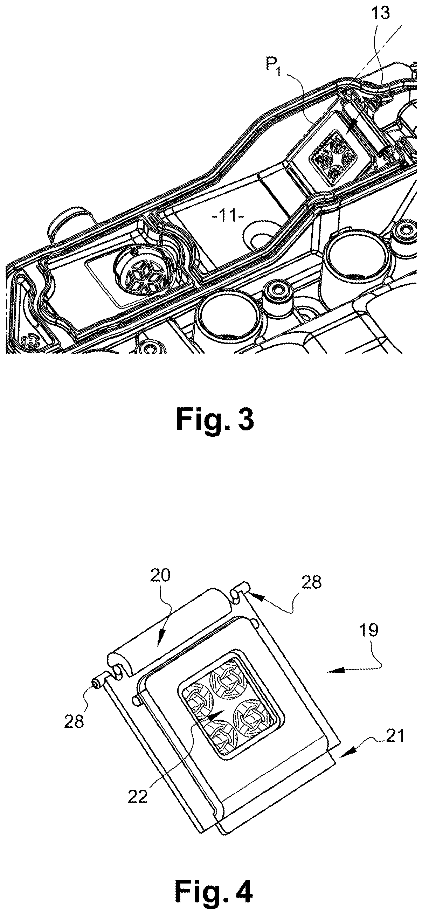

En référence aux figures 2 et 3, le système de décantation 1 d'huile selon l'invention comprend un boîtier de décantation 11 formant un seul bloc avec un couvre-culasse 12 d'un moteur à combustion interne. Ce boîtier de décantation 11 comprend notamment une zone d'entrée 13 pour le flux de gaz de fuite provenant du carter du moteur, un premier orifice de sortie 14 pour l'évacuation de l'huile récupérée des gaz de fuite et une deuxième orifice de sortie 15 pour l'évacuation des gaz de fuite épurés.

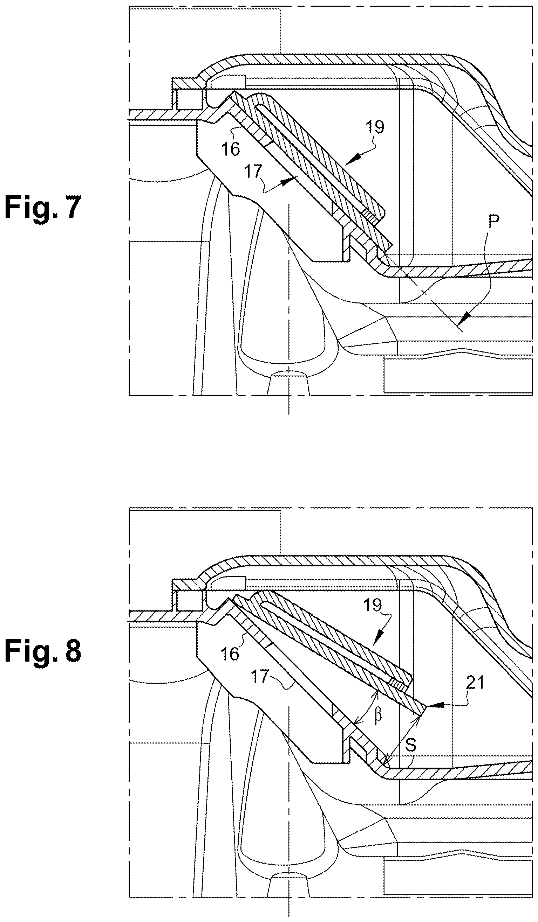

Tel que représenté sur les figures 4 à 6, la zone d'entrée 13 est formée par une paroi principale 16 munie d'une ouverture de passage 17, le boîtier de décantation 11 étant en communication fluidique avec l'intérieur du carter du moteur à travers ladite ouverture de passage 17. La paroi principale 16 est avantageusement disposée de manière oblique par rapport à une paroi secondaire 18 du boîtier de décantation 11 de telle sorte que, lors du fonctionnement normal du moteur, la paroi secondaire 18 soit orientée verticalement et la paroi principale 16 soit inclinée d'un angle α par rapport à la verticale. Un clapet 19 est articulé sur la paroi principale 16 de telle sorte qu'il peut pivoter autour d'un axe XX' au niveau d'une de ses extrémités 20 entre une première position, telle que représentée sur la figure 7, dans laquelle il repose sur la paroi principale 16, et une deuxième position, telle que représentée sur la figure 8, dans laquelle il est incliné d'un angle β non nul par rapport à la paroi principale 16. Le passage de la première position, dite position de fermeture, à la deuxième position, dite position d'ouverture, dépendra du flux de gaz de fuite. En particulier, le flux de gaz de fuite exerce sur le clapet 19 une poussée dirigée vers le haut et selon une direction sensiblement perpendiculaire au plan P définie par la paroi principale 16. Cette poussée est proportionnelle notamment au débit du flux de gaz de fuite. Tant que cette poussée est faible, c'est-à-dire tant que le débit du flux gazeux est faible, elle n'est pas suffisante pour contrer le poids du clapet 19 : le clapet 19 reste donc en appui contre la paroi principale 16. A l'inverse, lorsque le débit du flux gazeux dépasse une valeur seuil Dmin, qui dépend notamment du poids du clapet 19 et de l'angle d'inclinaison α, il génère une poussée suffisante pour soulever le clapet 19 : le clapet 19 n'est plus en appui contre la paroi principale 16 et du gaz de fuite peut donc s'échapper à travers la section de passage S formée entre l'extrémité libre 21 du clapet 19 et la paroi principale 16. Cette configuration permet donc de résoudre le problème des pertes de charges du fait de la surpression dans le carter du moteur. Par ailleurs, cette configuration présente l'avantage de ne pas nécessiter de moyens de rappel pour ramener le clapet 19 dans sa position de fermeture, étant donné que le clapet 19 revient automatiquement dans sa position de fermeture sous l'effet de la gravité. Durant le fonctionnement normal du moteur, le clapet 19 sera ainsi soumis constamment à une force de poussée vers le haut exercée par le flux de gaz de fuite et à une force d'attraction vers le bas du fait de son poids. Il aura ainsi tendance à osciller autour d'une position moyenne en fonction du niveau d'utilisation du moteur.

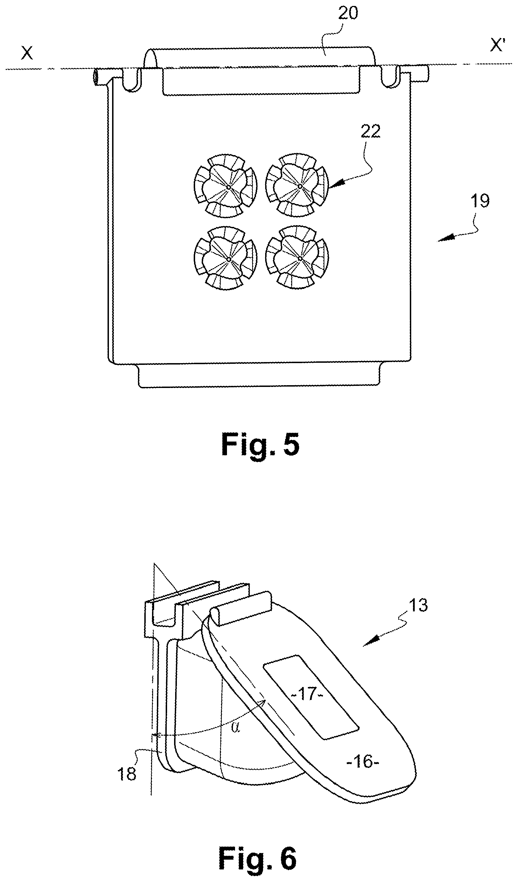

Le clapet 19 est doté de moyens de décantation 22, lesdits moyens de décantation 22 étant configurés pour extraire l'huile contenue dans le gaz de fuite. Plusieurs configurations possibles peuvent être envisagées à ce niveau. Ainsi, dans la configuration représentée sur les figures 4 et 5, les moyens de décantation 22 consistent en une série d'hélices fixes disposées à l'intérieur d'ouvertures traversantes formées dans la paroi du clapet 19. Le fonctionnement et les détails de structure de telles hélices fixes ont notamment été décrits dans le brevet EP 1 684 888. Une autre configuration possible pourrait consister à utiliser des hélices possédant au moins un volet mobile. Une telle configuration a notamment été décrite dans le brevet EP 2 050 491. Une troisième configuration envisageable pourrait consister à disposer un matériau poreux à base de fibres dans une ouverture traversante centrale du clapet 19. Quelle que soit la configuration utilisée, le clapet 19 doté desdits moyens de rétention 22 permet ainsi de laisser passer à l'intérieur du boîtier de décantation 11 un flux de gaz de fuite épuré.

Le volume de gaz de fuite épuré sortant du boîtier de décantation 11 sera évidemment plus important lorsque le clapet 19 sera dans sa position de fermeture étant donné que, dans cette position de fermeture, l'intégralité du flux gazeux entre via l'ouverture de passage 17 et les moyens de décantation 22. Au contraire, lorsque le clapet 19 est en position d'ouverture, une part du flux gazeux entre dans le boîtier de décantation 11 via la section de passage S et n'est donc pas épuré par les moyens de décantation 22.

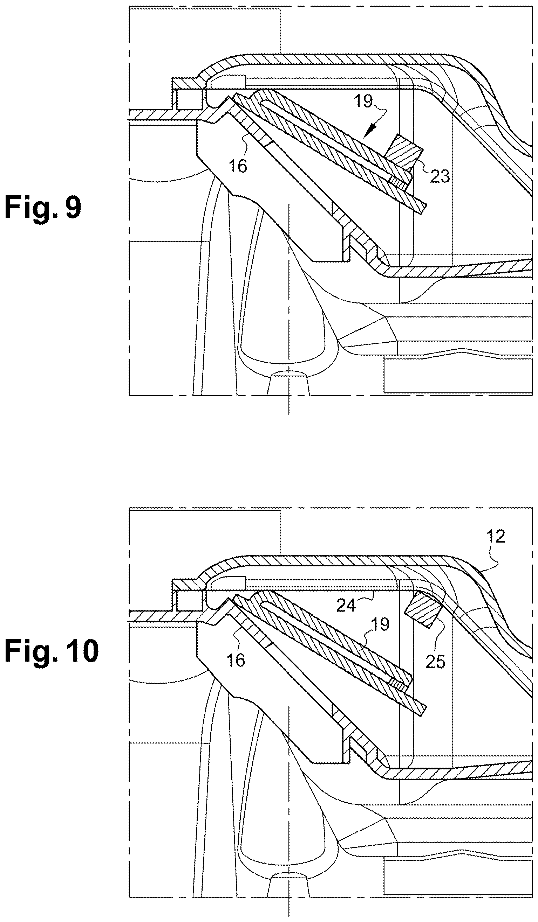

En référence à la figure 9, il est représenté une première variante possible de l'invention. Dans cette variante, le clapet 19 comprend un contrepoids 23 disposé à proximité de son extrémité libre 21. Ce contrepoids 23 permettra d'alourdir le clapet 19, augmentant ainsi la force d'attraction vers le bas auquel il est soumis. Il en résulte une augmentation concomitante de la valeur seuil Dmin du débit du flux de gaz de fuite à partir duquel le clapet 19 commence à se soulever sous l'effet de la poussée exercée par le flux gazeux en amont du clapet 19.

En référence à la figure 10, il est représenté une deuxième variante possible de l'invention. Dans cette variante, une paroi interne 24 du couvre-culasse 12 est pourvue d'un élément de butée 25, ledit élément de butée 25 étant disposé de manière à limiter le pivotement du clapet 19 autour de son extrémité 20. Cet élément de butée 25 évitera ainsi une ouverture trop importante du clapet 19, et, de ce fait, limitera le risque de chocs directs entre le clapet 19 et la paroi interne 24. De manière avantageuse, il est envisageable d'utiliser un matériau élastique absorbant les chocs pour former l'élément de butée 25 de telle sorte que les chocs directs du clapet 19 contre l'élément de butée 25 n'entrainent pas une détérioration ou une destruction du clapet 19. Dans une autre configuration de l'invention, un élément absorbeur de chocs pourra également être intégré au clapet 19 lui-même. Cet élément absorbeur sera disposé sur la face du clapet 19 qui est orientée vers la paroi interne 24 du couvre-culasse 12.

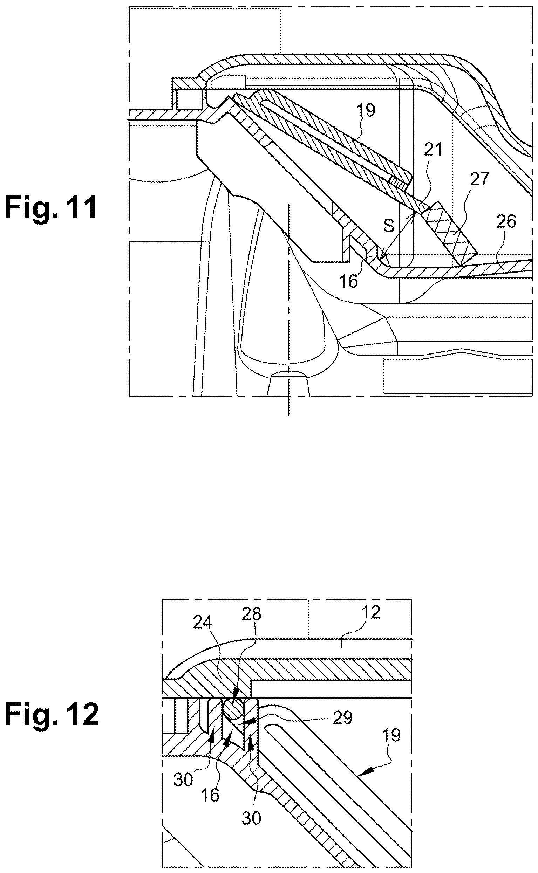

En référence à la figure 11, il est représenté une troisième variante possible de l'invention. Dans cette variante, une structure de tamis 27 flexible est fixée ou est solidaire de l'extrémité libre 21 du clapet 19 et s'étend entre cette extrémité libre 21 et une paroi de fond 26 du boîtier de décantation 11 qui est contiguë à la paroi principale 16 de telle sorte que, dans la position d'ouverture du clapet, l'espace libre entre cette extrémité libre 21 et cette paroi de fond 26 est au moins partiellement obstruée par ladite structure de tamis 27. De cette façon, le flux de gaz de fuite circulant à travers la section de passage S formée entre la paroi principale 16 et le clapet 19 traverse au moins partiellement la structure de tamis 27. Cette structure de tamis 27 pourra avantageusement être constituée d'un matériau poreux à base de fibres lui conférant la capacité de retenir l'huile contenue dans le gaz de fuite. Un flux de gaz de fuite épuré pourra ainsi circuler en aval de la structure de tamis 27 à l'intérieur du boîtier de décantation 11.

En référence à la figure 12, il est représenté un détail de structure du clapet 19 représenté sur les figure 4 et 5. Ce détail montre l'une des solutions techniques envisageables permettant de réaliser la fixation pivotante du clapet 19 sur la paroi principale 16. Dans cette solution, l'extrémité 20 du clapet 19 comporte, de chaque côté, un élément tubulaire 28 faisant saillie, ledit élément tubulaire 28 étant destiné à venir se loger dans un espace 29 délimité respectivement, en haut et en bas, par la paroi interne 24 du couvre-culasse 12 et par la paroi principale 16 et, latéralement, par deux nervures verticales 30 du boîtier de décantation 11. Ainsi disposés, les éléments tubulaires 28 peuvent uniquement pivoter à l'intérieur de l'espace 29, permettant ainsi au clapet 19 de se déplacer de manière pivotante entre sa position de fermeture et une de ses positions d'ouverture.

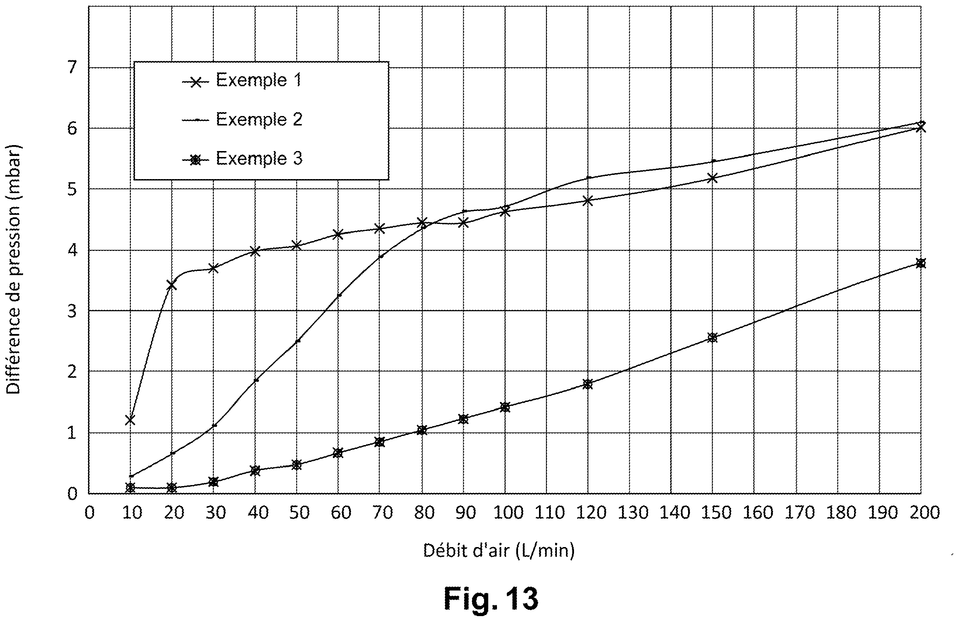

En référence à la figure 13, il est représenté un graphe montrant l'évolution du différentiel de pression entre l'extérieur et l'intérieur du boîtier de décantation 11 en fonction du débit de flux gazeux et, ce, pour plusieurs modes de réalisation du système de décantation 1.

Dans le mode de réalisation de l'exemple 1, la paroi principale 16 est inclinée à 45° par rapport à la verticale. L'ouverture de passage 17 possède une section sensiblement carrée couvrant une surface de 400 mm² environ. Le clapet 19 possède également un profil sensiblement carré dont les côtés ont une longueur de 50 mm environ. La masse du clapet 19 est de 50 g. On constate sur le graphe que la courbe s'infléchit sensiblement lorsque le débit du flux gazeux dépasse 20 L/min. Cette valeur correspond donc à la valeur seuil Dmin à partir de laquelle le clapet 19 se soulève sous l'effet de la pression exercée par le flux de gaz de fuite en amont du clapet 19. En effet, lorsque le clapet 19 se soulève, le différentiel de pression entre l'extérieur et l'intérieur du boîtier de décantation 11 cesse de croître de manière exponentielle et suit ensuite une progression relativement linéaire.

Dans le mode de réalisation de l'exemple 2, les dimensions du clapet 19, de la paroi principale 16 et de l'ouverture de passage 17, ainsi que l'angle d'inclinaison α, restent inchangés par rapport à l'exemple 1. En revanche, la masse du clapet 19 est de 20 g. On constate sur le graphe que la courbe s'infléchit lorsque le débit du flux gazeux dépasse 85 L/min. Cette valeur correspond à la valeur seuil Dmin mentionné précédemment.

Dans le mode de réalisation de l'exemple 3, les dimensions du clapet 19, de la paroi principale 16 et de l'ouverture de passage 17, ainsi que l'angle d'inclinaison α, restent inchangés par rapport à l'exemple 1. En revanche, la masse du clapet 19 est de 5 g. On constate sur le graphe que la courbe s'infléchit lorsque le débit du flux gazeux dépasse 40 L/min. Cette valeur correspond à la valeur seuil Dmin mentionné précédemment.

## Revendications

1. Système de décantation (1) d'huile pour un moteur à combustion interne comprenant au moins une paroi principale (16) munie d'une ouverture de passage (17) pour un flux de gaz de fuite et un dispositif de séparation (19, 22) disposé en aval de ladite ouverture de passage (17) dans le sens de circulation dudit flux de gaz de fuite, le dispositif de séparation comprenant un clapet (19) doté de moyens de décantation (22) aptes à retenir l'huile contenue dans le gaz de fuite et à laisser passer un flux de gaz de fuite épuré, **caractérisé en ce que** le clapet (19) est monté de manière pivotante sur la paroi principale (16) de telle sorte que son inclinaison par rapport à ladite paroi principale (16) varie en fonction du flux de gaz de fuite.

2. Système de décantation (1) selon la revendication 1, **caractérisé en ce que** le clapet (19) est mobile entre une position de fermeture dans laquelle son angle d'inclinaison (β) par rapport à la paroi principale (16) est nul, le flux de gaz de fuite circulant uniquement au travers des moyens de décantation (22) du clapet (19), et une position d'ouverture dans laquelle son angle d'inclinaison (β) par rapport à la paroi principale (16) n'est pas nul, le flux de gaz de fuite circulant en partie au travers des moyens de décantation (22) du clapet (19) et en partie au travers d'une section de passage (S) formée entre la paroi principale (16) et le clapet (19).

3. Système de décantation (1) selon la revendication 1 ou 2, **caractérisé en ce que** le clapet (19) est maintenu en position de fermeture par gravité.

4. Système de décantation (1) selon l'une des revendications précédentes, **caractérisé en ce que** le clapet (19) comprend une première extrémité (20) reliée de manière pivotante sur la paroi principale (16) et une deuxième extrémité (21) sensiblement parallèle à ladite première extrémité (20).

5. Système de décantation (1) selon la revendication 4, **caractérisé en ce que** le clapet (19) comprend un élément (23) destiné à faire contrepoids, ledit élément (23) étant disposé au niveau de la deuxième extrémité (21).

6. Système de décantation (1) selon la revendication 4 ou 5 lorsqu'elle dépend de la revendication 2, **caractérisé en ce qu'**il comprend une structure de tamis (27) flexible s'étendant depuis la deuxième extrémité (21) du clapet (19) et disposée de telle sorte que, dans la position d'ouverture du clapet (19), le flux de gaz de fuite circulant à travers la section de passage (S) formée entre la paroi principale (16) et le clapet (19) traverse au moins partiellement ladite structure de tamis (27), ladite structure de tamis (27) étant ainsi apte à retenir l'huile contenue dans ledit flux gaz de fuite et à laisser passer un flux de gaz de fuite épuré.

7. Système de décantation (1) selon l'une quelconque des revendications précédentes, **caractérisé en ce que** les moyens de décantation (22) du clapet (19) sont constitués par au moins une hélice fixe disposée à l'intérieur d'au moins une ouverture traversante formée dans la paroi du clapet 19.

8. Système de décantation (1) selon l'une des revendications précédentes, **caractérisé en ce qu'**il comprend des moyens de butée (25) aptes à limiter l'angle d'inclinaison du clapet (19) par rapport à la paroi principale (16).

9. Système de décantation (1) selon la revendication 8, **caractérisé en ce que** les moyens de butée (25) sont configurés pour amortir élastiquement les chocs.

10. Système de décantation (1) selon l'une des revendications précédentes, **caractérisé en ce que** le clapet (19) est configuré pour former un angle d'inclinaison non nul avec la paroi principale (16) lorsque le débit du flux de gaz de fuite au niveau de l'ouverture est suffisamment important pour ouvrir ledit clapet (19).

11. Système de décantation (1) selon la revendication 10, **caractérisé en ce que** le clapet (19) est configuré pour former un angle d'inclinaison non nul avec la paroi principale (16) lorsque le débit du flux de gaz de fuite au niveau de l'ouverture de passage (17) est supérieur à 20 L/min.

12. Moteur à combustion interne comprenant un système de décantation (1) selon l'une des revendications précédentes.

## Patentansprüche

1. Öl-Dekantierungssystem (1) für einen Verbrennungsmotor, umfassend mindestens eine Hauptwand (16), die mit einer Durchgangsöffnung (17) für einen Leckgasstrom versehen ist und eine Trennvorrichtung (19, 22), die in Zirkulationsrichtung des Leckgasstroms der Durchgangsöffnung (17) vorgelagert angeordnet ist, wobei die Trennvorrichtung ein Ventil (19) umfasst, das mit Dekantierungsmitteln (22) ausgestattet ist, die imstande sind, das im Leckgas enthaltene Öl zurückzuhalten und einen gereinigten Leckgasstrom hindurchgehen zu lassen, **dadurch gekennzeichnet, dass** das Ventil (19) auf der Hauptwand (16) derart schwenkend angeordnet ist, dass seine Neigung im Verhältnis zur Hauptwand (16) in Abhängigkeit vom Leckgasstrom schwankt.

2. Dekantierungssystem (1) nach Anspruch 1, **dadurch gekennzeichnet, dass** das Ventil (19) zwischen einer Verschlussposition, in der sein Neigungswinkel (β) im Verhältnis zur Hauptwand (16) null ist, wobei der Leckgasstrom nur durch Dekantierungsmittel (22) des Ventils (19) zirkuliert, und einer geöffneten Position beweglich ist, in der sein Neigungswinkel (β) im Verhältnis zur Hauptwand (16) nicht null ist, wobei der Leckgasstrom zum Teil durch Dekantierungsmittel (22) des Ventils (19) und zum Teil durch einen Durchgangsquerschnitt (S) zirkuliert, der zwischen der Hauptwand (16) und dem Ventil (19) gebildet ist.

3. Dekantierungssystem (1) nach Anspruch 1 oder 2, **dadurch gekennzeichnet, dass** das Ventil (19) durch Schwerkraft in Verschlussposition gehalten wird.

4. Dekantierungssystem (1) nach einem der vorangehenden Ansprüche, **dadurch gekennzeichnet, dass** das Ventil (19) ein erstes Ende (20) umfasst, das auf der Hauptwand (16) schwenkend verbunden ist, und ein zum ersten Ende (20) etwa paralleles zweites Ende (21).

5. Dekantierungssystem (1) nach Anspruch 4, **dadurch gekennzeichnet, dass** das Ventil (19) ein Element (23) umfasst, das als Gegengewicht bestimmt ist, wobei das Element (23) im Bereich des zweiten Endes (21) angeordnet ist.

6. Dekantierungssystem (1) nach Anspruch 4 oder 5 wenn er von Anspruch 2 abhängt, **dadurch gekennzeichnet, dass** es eine flexible Siebstruktur (27) umfasst, die sich ab dem zweiten Ende (21) des Ventils (19) erstreckt und derart angeordnet ist, dass in der geöffneten Position des Ventils (19) der Leckgasstrom, der durch den Durchgangsquerschnitt (S) zirkuliert, der zwischen der Hauptwand (16) und dem Ventil (19) gebildet ist, mindestens teilweise die Siebstruktur (27) durchquert, wobei die Siebstruktur (27) somit imstande ist, das im Leckgasstrom enthaltene Öl zurückzuhalten und einen gereinigten Leckgasstrom hindurchgehen zu lassen.

7. Dekantierungssystem (1) nach einem der vorangehenden Ansprüche, **dadurch gekennzeichnet, dass** die Dekantierungsmittel (22) des Ventils (19) von mindestens einer festen Schraube gebildet sind, die im Inneren von mindestens einer Durchgangsöffnung angeordnet ist, die in der Wand des Ventils (19) gebildet ist.

8. Dekantierungssystem (1) nach einem der vorangehenden Ansprüche, **dadurch gekennzeichnet, dass** es Anschlagmittel (25) umfasst, die imstande sind, den Neigungswinkel des Ventils (19) im Verhältnis zur Hauptwand (16) zu begrenzen.

9. Dekantierungssystem (1) nach Anspruch 8, **dadurch gekennzeichnet, dass** die Anschlagmittel (25) dazu ausgelegt sind, die Stöße elastisch zu dämpfen.

10. Dekantierungssystem (1) nach einem der vorangehenden Ansprüche, **dadurch gekennzeichnet, dass** das Ventil (19) dazu ausgelegt ist, einen Neigungswinkel von nicht null mit der Hauptwand (16) zu bilden, wenn der Durchsatz des Leckgasstroms im Bereich der Öffnung ausreichend groß ist, um das Ventil (19) zu öffnen.

11. Dekantierungssystem (1) nach Anspruch 10, **dadurch gekennzeichnet, dass** das Ventil (19) dazu ausgelegt ist, einen Neigungswinkel von nicht null mit der Hauptwand (16) zu bilden, wenn der Durchsatz des Leckgasstroms im Bereich der Durchgangsöffnung (17) größer als 20 L/min ist.

12. Verbrennungsmotor, umfassend ein Dekantierungssystem (1) nach einem der vorangehenden Ansprüche.

## Claims

1. An oil decantation system (1) for an internal combustion engine comprising at least one main wall (16) provided with a passage opening (17) for a blow-by gas flow and a separation device (19, 22) disposed downstream of said passage opening (17) in the direction of circulation of said blow-by gas flow, the separation device comprising a valve (19) provided with decantation means (22) capable of retaining the oil contained in the blow-by gas and letting a purified blow-by gas flow pass, **characterized in that** the valve (19) is pivotally mounted on the main wall (16) so that its inclination relative to said main wall (16) varies according to the blow-by gas flow.

2. The decantation system (1) according to claim 1, **characterized in that** the valve (19) is movable between a closed position in which its angle of inclination (β) relative to the main wall (16) is zero, the blow-by gas flow circulating only through the decantation means (22) of the valve (19), and an open position in which its angle of inclination (3) relative to the main wall (16) is non-zero, the blow-by gas flow circulating partly through the decantation means (22) of the valve (19) and partly through a passage section (S) formed between the main wall (16) and the valve (19).

3. The decantation system (1) according to claim 1 or 2, **characterized in that** the valve (19) is held in the closed position by gravity.

4. The decantation system (1) according to any of the preceding claims, **characterized in that** the valve (19) comprises a first end (20) pivotally connected on the main wall (16) and a second end (21) substantially parallel to said first end (20).

5. The decantation system (1) according to claim 4, **characterized in that** the valve (19) comprises an element (23) intended to act as a counterweight, said element (23) being disposed at the second end (21).

6. The decantation system (1) according to claim 4 or 5 when dependent on claim 2, **characterized in that** it comprises a flexible screen structure (27) extending from the second end (21) of the valve (19) and disposed so that, in the open position of the valve (19), the blow-by gas flow circulating through the passage section (S) formed between the main wall (16) and the valve (19) at least partially passes through said screen structure (27), said screen structure (27) thus being capable of retaining the oil contained in said blow-by gas flow and letting a purified blow-by gas flow pass.

7. The decantation system (1) according to any one of the preceding claims, **characterized in that** the decantation means (22) of the valve (19) consist of at least one fixed propeller disposed inside at least one through opening formed in the wall of the valve (19).

8. The decantation system (1) according to any of the preceding claims, **characterized in that** it comprises stop means (25) capable of limiting the angle of inclination of the valve (19) relative to the main wall (16).

9. The decantation system (1) according to claim 8, **characterized in that** the stop means (25) are configured to elastically absorb shocks.

10. The decantation system (1) according to any of the preceding claims, **characterized in that** the valve (19) is configured to form a non-zero angle of inclination with the main wall (16) when the flow rate of the blow-by gas flow at the opening is sufficiently large to open said valve (19).

11. The decantation system (1) according to claim 10, **characterized in that** the valve (19) is configured to form a non-zero angle of inclination with the main wall (16) when the flow rate of the blow-by gas flow at the passage opening (17) is greater than 20 L/min.

12. An internal combustion engine comprising a decantation system (1) according to any of the preceding claims.
